# EUROPEAN PATENT APPLICATION

(11) **EP 2 645 208 A2**
(43) Date of publication of application: **02.10.2013**
(21) Application number: 11842562.8
(22) Date of filing: 21.11.2011
(51) Int. Cl.: G06F 3/041

(54) **TEMPERED GLASS SHEET FOR A TOUCH PANEL, AND METHOD FOR MANUFACTURING SAME**

(30) Priority: 25.11.2010 KR 20100118366
(71) Applicant: Optsol Co., Ltd., Gyeonggi-do 431-763 (KR)
(72) Inventor: KIM, Hyeong-Dong, Anyang-si Gyeonggi-do 431-080 (KR)
(74) Representative: Dantz, Jan Henning
(86) International application number: PCT/KR2011/008885
(87) International publication number: WO 2012/070819

(57) **Abstract**

The present invention relates to a tempered glass sheet for a touch panel, and to a method for manufacturing the tempered glass sheet for a touch panel. The method for manufacturing the tempered glass sheet for a touch panel consisting of tempered glass includes: a first step in which mother glass, including cell glass for a plurality of touch panels, is tempered; a second step in which a process for forming a substrate is performed, which includes forming a transparent electrode by the mother glass unit; and a third step in which, after the substrate-forming process and a half-etching process are completed, the mother glass is cut for the mother glass unit and the cut surface is ground after cutting.

## Description

### Technical Field

The present invention relates to a tempered glass sheet for a touch panel and a method of manufacturing the same and, more particularly, to a tempered glass sheet for a touch panel and to a method of manufacturing the same, wherein a boundary region of the tempered glass sheet is subjected to chemical etching in a half-etching state, a substrate forming process is performed on mother glass, and cutting into a plurality of pieces of cell glass is performed.

### Background Art

As touch screen panels (TSPs) comprising tempered glass and transparent electrodes integrated with each other have recently been introduced, competition in touch screen markets has intensified.

TSPs are used to select desired information via displays by a user, by imparting a touch function to flat panel displays, such as electronic organizers, LCD (Liquid Crystal Display Device), PDP (Plasma Display Panel), EL (Electroluminescense), etc. TSPs are largely classified into 1) resistive type, 2) capacitive type, and 3) resistive-multi type.
1) A resistive type is configured such that glass or a plastic plate is coated with a material having a resistance component, and then covered with a polyethylene film, and insulating rods are disposed at a predetermined interval so that two sides do not come into contact with each other. The operating principle is as follows: when a predetermined current flows to both ends of a resistant film, the resistant film functions as a resistor having a resistance component and thus a voltage is applied to both ends. When touched by the finger of a user, the upper polyethylene film is curved and thus the two sides come into contact with each other. Accordingly, parallel connection of resistance is formed due to the resistance components of the two sides, and the resistance values vary. As such, there occur changes in voltage by the current flowing to both ends, and the extent of changes in voltage is detected, so that the position of the touched finger may be determined. A resistive type is advantageous because operation due to surface pressure results in high resolution and fast response rate, but is disadvantageous because only one touch position may be detected at a time and it is more likely to be damaged.
2) A capacitive type is manufactured by coating both sides of thermally treated glass with transparent special conductive metal (TAO). When a voltage is applied to four corners of a screen, high frequency spreads over the entire surface of a sensor. As such, when the screen is touched by a finger of a user, the flow of electrons changes and such changes are detected, so that the touched coordinates are determined. A capacitive type is advantageous because operation is possible by touching multiple points at the same time, and high resolution and good durability may result, but is problematic because of low response rate and difficulty in mounting.
3) A resistive-multi-touch type is provided so as to be executable as in the capacitive type by solving the big problem of the resistive type in which operation is possible at only one point.

Also, TSPs are selectively used in individual electronic products, taking into consideration not only signal amplification problems, resolution differences, and difficulties in design and processing techniques, but also optical properties, electrical properties, mechanical properties, eco properties, input properties, durability and profitability of individual touch screen panels. Particularly in the case of electronic organizers, PDAs, mobile PCs and mobile phones (cell phones), a resistive type and a capacitive type are widely utilized.

In the techniques for manufacturing touch screens henceforth, touch screen panels are intended to be manufactured to be thinner so as to have sufficient durability, even when the number of conventional complicated processes is decreased as much as possible. This is because it is required to exhibit the same performance as in conventional products even when light transmittance is increased to thus decrease display luminance, thereby reducing power consumption, consequently increasing the service time of batteries.

Hence, touch screen panels using a glass sheet having a thickness of 1.8 mm or less are proposed in accordance with such demands. In the case where a user sits down in a state in which the touch screen panel using such a thin glass sheet is placed in the back pocket of the user, such a panel may be damaged, and thus tempered glass should be adopted.

To temper the glass sheet having a thickness of 1.8 mm or less, thermal treatment cannot be used, and thus a chemical tempering process is utilized. The chemical tempering process is performed in such a way that Na+ ions are removed from glass and a K+ material is implanted instead so as to temper the glass.

For the sake of description, a glass sheet having a large size is referred to as "mother glass," and glass having a small panel glass size for a touch panel by cutting the mother glass is referred to as "cell glass."

The cell glass for a touch panel using a tempered glass sheet having a thickness of 1.8 mm or less is manufactured conventionally as follows.

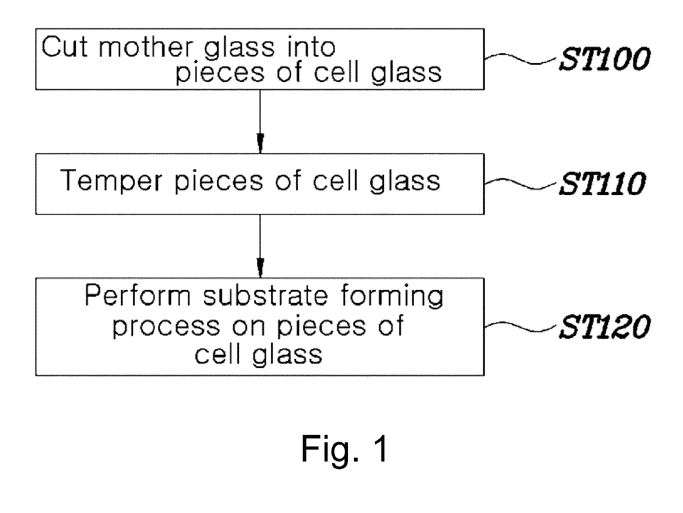

As illustrated in FIG. 1, a conventional process of manufacturing a panel for a touch panel using a tempered glass sheet having a thickness of 1.8 mm or less is briefly described below. Mother glass having a large size including a plurality of cells is cut into cell glass (ST100). The cut cell glass is tempered using a chemical tempering process (ST110). The cut cell glass is subjected to a touch panel forming process including forming a transparent electrode layer, etc. (ST120).

However, the conventional process of manufacturing the panel for a touch panel using the tempered glass sheet having a thickness of 1.8 mm or less is problematic because the mother glass is cut into the cell glass and then the substrate forming process (including forming a transparent electrode layer, etc.) is performed on the cell glass, undesirably lowering the process yield compared to processes carried out on mother glass.

### Disclosure

### Technical Problem

Accordingly, the present invention has been made keeping in mind the above problems occurring in the related art, and an object of the present invention is to provide a tempered glass sheet for a touch panel and a method of manufacturing the same, wherein a substrate forming process may be performed on mother glass even with the use of a tempered glass sheet having a thickness of 1.8 mm or less.

In addition, another object of the present invention is to provide a method of manufacturing a tempered glass sheet for a touch panel, wherein, after subjecting mother glass to tempering treatment and substrate processing, even when the mother glass is cut into a plurality of pieces of cell glass corresponding to a touch panel size, the cut edges of the pieces of cell glass may be tempered to some extent.

### Technical Solution

The above object of the present invention may be accomplished by a method of manufacturing a tempered glass sheet for a touch panel consisting of tempered glass, comprising a first step of tempering mother glass including a plurality of pieces of cell glass for a touch panel, a second step of subjecting the mother glass to a substrate forming process including a transparent electrode forming process, and a third step of cutting the mother glass subjected to the substrate forming process and half-etching into the plurality of pieces of cell glass, and grinding cut edges of the pieces of cell glass.

In addition, the above object of the present invention may be accomplished by a tempered glass sheet for a touch panel, having an edge surface which includes a center region located at the centerline of a thickness of the tempered glass sheet and outer regions located at the center region and both sides of the tempered glass sheet, wherein each of the outer regions has an externally concave curved shape and the center region has an externally convex curved shape connected to the concave curved shape.

### Advantageous Effects

In a tempered glass sheet for a touch panel and a method of manufacturing the same according to the present invention, a substrate forming process can be carried out on mother glass having a large size, thus facilitating the substrate forming process and increasing the production yield.

Also, in the method of manufacturing the tempered glass sheet for a touch panel according to the present invention, a substrate forming process is performed on tempered mother glass having a thickness of 1.8 mm or less and then a region of the mother glass which is not tempered can be cut and ground, thus suppressing the generation of chips compared to conventional techniques.

### Description of Drawings

FIG. 1 is a flowchart illustrating a conventional process of manufacturing a glass sheet for a touch panel using a tempered glass sheet;
FIG. 2 is a flowchart illustrating a process of manufacturing a glass sheet for a touch panel using a tempered glass sheet according to an embodiment of the present invention;
FIG. 3 is a perspective view illustrating a boundary region of mother glass which is subjected to half-etching according to the embodiment of the present invention;
FIG. 4 is an enlarged cross-sectional view taken along the line a-a' of FIG. 3;
FIG. 5 is a flowchart illustrating a process of manufacturing a glass sheet for a touch panel using a tempered glass sheet according to another embodiment of the present invention;
FIG. 6 is a perspective view illustrating the mother glass after ST500 and ST510, in the modification embodiment according to the present invention;
FIG. 7 is a cross-sectional view taken along the line b-b' of FIG. 6;
FIG. 8 is a cross-sectional view taken along the line b-b' after tempering at ST520 following the procedures of FIG. 7;
FIG. 9 is a flowchart illustrating a process of manufacturing a glass sheet for a touch panel using a tempered glass sheet according to still another embodiment of the present invention;
FIG. 10 is an enlarged view illustrating a shape of the cut edge of the cell glass produced according to the present invention;
FIG. 11 is an enlarged view illustrating another shape of the cut edge of the cell glass produced according to the present invention; and
FIG. 12 is an enlarged view illustrating still another shape of the cut edge of the cell glass produced according to the present invention.

### Mode for Invention

Hereinafter, a detailed description will be given of preferred embodiments, advantages and features of the present invention with reference to the appended drawings.

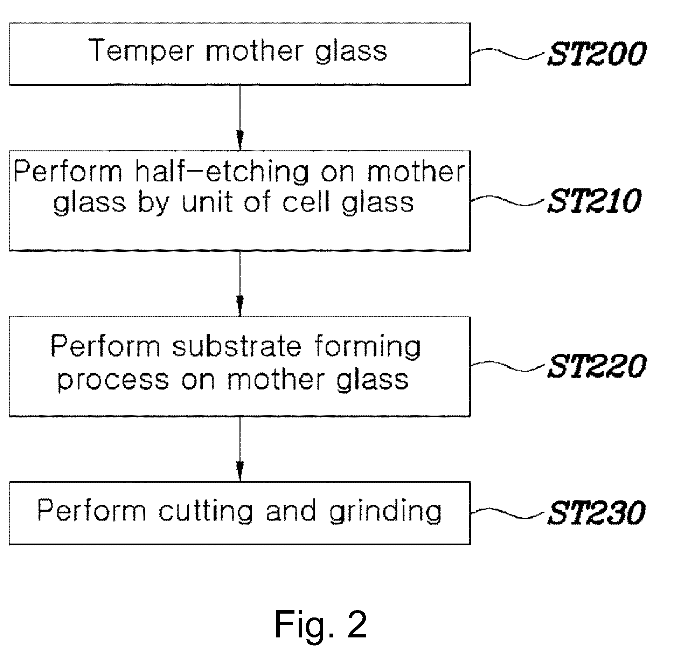

FIG. 2 schematically illustrates a process of manufacturing a tempered glass sheet for use in a touch panel having a thickness of 1.8 mm or less according to an embodiment of the present invention. Specifically, mother glass is tempered (ST200). A glass sheet used in the present invention has a thickness of 1.8 mm or less, and thus a chemical tempering process is preferably applied. As mentioned in the background art, a chemical tempering process is performed in such a way that Na+ ions are removed from glass and a K+ material is implanted instead so as to temper the glass.

Before cutting the upper and lower sides of the mother glass into a cell glass size in a thickness direction thereof, the mother glass is subjected to chemical etching along a boundary region for forming a plurality of pieces of cell glass (ST210). As such, chemical etching is conducted in such a manner that the mother glass is not completely cut into a plurality of pieces of cell glass but rather the center thereof is partially left behind based on a thickness direction, which is referred to as "half-etching" in the present invention. The upper and lower sides of the mother glass are subjected to chemical etching toward the center thereof based on the thickness by means of half-etching, and a predetermined region which is not etched and is left behind exist at the center of the mother glass.

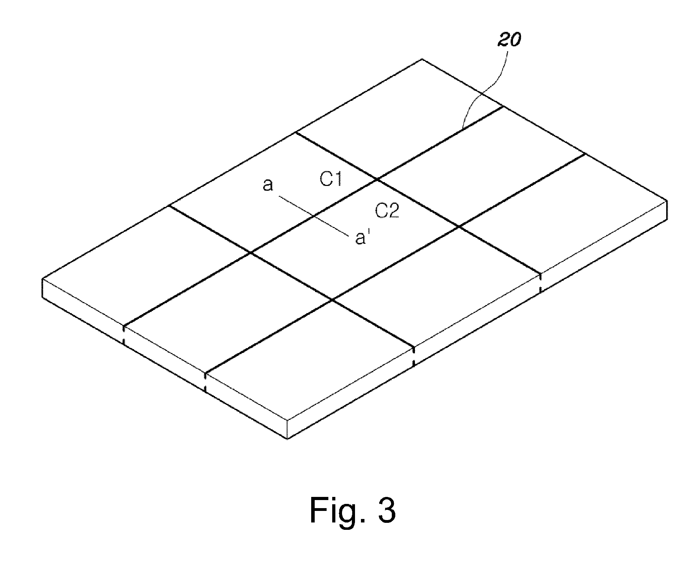

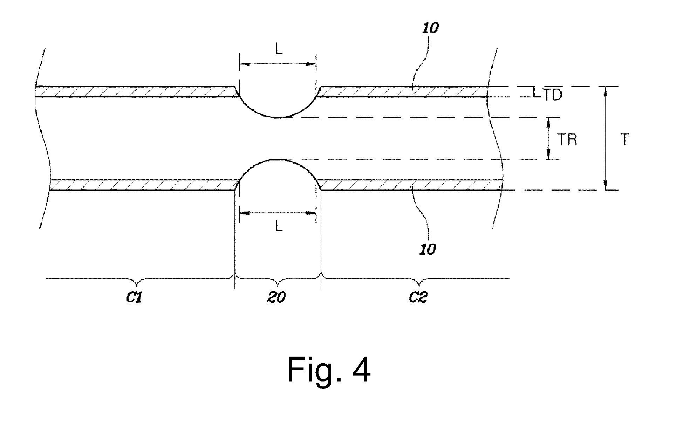

FIG. 3 illustrates the boundary region of the mother glass which is subjected to half-etching according to the embodiment of the present invention, FIG. 4 is an enlarged cross-sectional view taken along the line a-a' of FIG. 3. FIG. 3 illustrates the formation of nine pieces of cell glass from a piece of mother glass and is a perspective view showing a state of chemical half-etching along the boundary region 20 for forming a plurality of pieces of cell glass being performed. FIG. 4 is an enlarged cross-sectional view showing the half-etched edge between C1 cell glass and C2 cell glass. Although FIG. 3 depicts a piece of mother glass including nine pieces of cell glass, it is merely illustrative, and many more pieces of cell glass or many less pieces of cell glass may be formed from a piece of mother glass.

As illustrated in FIG. 4, the upper and lower sides of the mother glass are subjected to chemical etching along the boundary region 20. The mother glass is tempered at ST200. When tempering is performed in this way, a chemically tempered region 10 is formed as deep as TD from the surface of each of the upper and lower sides of the mother glass. DOL (Depth of Layer) resulting from chemical tempering is known to be about 50 ∼ 60 µm in the case of Gorilla glass used in iPhones currently widely available. In the present invention, the subsequent cutting and grinding processes have to be performed on the region of the mother glass other than the tempered region, and thus the depth of half-etching at ST210 should be formed so as to exceed at least the DOL, and isotropic chemical etching is typically carried out. For example, if the thickness (T) of the mother glass shown in FIG. 4 is 1.8 mm and the tempered depth (TD) is 60 µm, half-etching is performed such that the depth of half-etching is greater than the TD and is smaller than half the thickness (T) of the mother glass. In order to efficiently perform the subsequent cutting and grinding processes, half-etching should be performed so as to sufficiently expose a non-tempered region of the mother glass. Preferably, the thickness (TR) of the residual region of the mother glass left behind in the thickness direction after half-etching is set to be greater than at least 5 µm. If the thickness (TR) of the residual region of the mother glass is formed to 5 µm or less, the half-etched region may be undesirably cut in the subsequent substrate forming process.

Also, the horizontal distance (L) which is not tempered between neighboring pieces of cell glass after half-etching should be differently set depending on the type of the subsequent cutting process and the size of cell glass. For example, when the cutting process is performed using sand blasting, the horizontal distance (L) should be greater, compared to when the cutting process is performed using laser light.

Subsequently, a substrate forming process is performed on the mother glass which is half-etched (ST220). The substrate forming process is carried out in various forms depending on the substrate structure to be formed. For example, every piece of cell glass is subjected to a decoration region forming process for forming the boundary of a window and the logo of a manufacturer using black ink, a process of forming an overcoating layer or an anchor coating layer to form a transparent electrode, and a process of forming a transparent electrode on the overcoating layer or the anchor coating layer.

In the manufacturing process shown in FIG. 2, half-etching of the tempered mother glass including the plurality of pieces of cell glass (ST210), and then the substrate forming process (ST220) are conducted, in that order. The main gist of the present invention is to perform the substrate forming process on the mother glass. Even when ST210 and ST220 are performed vice versa, the object of the invention may be achieved.

After completion of the substrate forming process, the mother glass is cut into the plurality of pieces of cell glass and then ground (ST230). As such, the cutting process and the grinding process are carried out on the region (L) of the mother glass which is exposed through the tempered region by half-etching. Thus, when the tempered region is etched, chips may be formed due to surface stress, or in severe cases, cracking may occur. However, because the cutting process and the grinding process according to the present invention are performed on the region of the mother glass, which is not tempered, that is, because these processes are performed on the region of the mother glass where stress is not intensively applied, the generation of chips may be advantageously reduced.

The cutting process is preferably carried out by means of a physical cutting process, such as cutting using laser light, diamond wheel cutting, water jet cutting, sand blasting, etc., but it may also be performed using chemical cutting with fluorine.

As such, the cut edges are regions which are not tempered and may become weak to external impact. In the present invention, after the cutting process, lateral sides that are not tempered may be coated with a hydrofluoric acid-containing paste and then washed, and thereby may be tempered to some extent.

### First modification embodiment

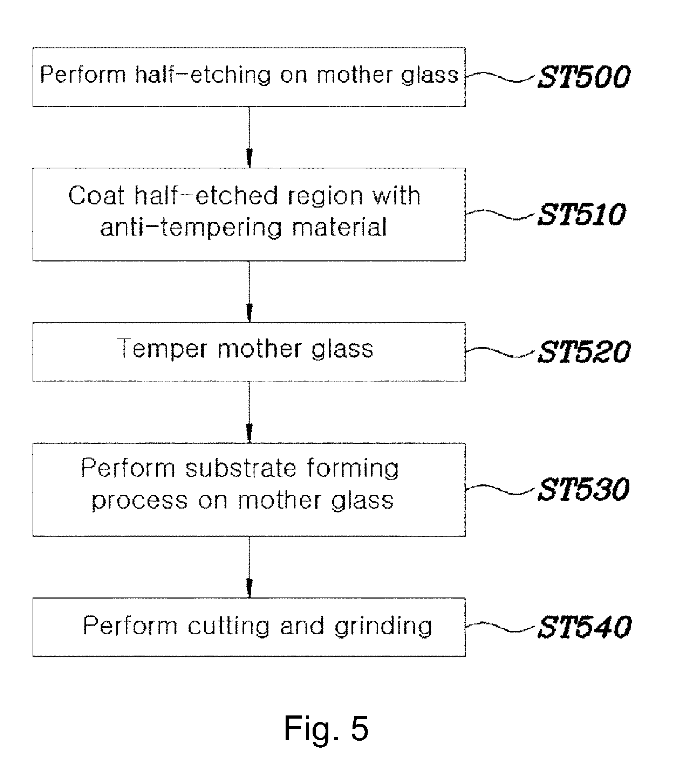

FIG. 5 is a flowchart illustrating a process of manufacturing a glass sheet for a touch panel using a tempered glass sheet according to another embodiment of the present invention. The upper and lower sides of mother glass including a plurality of pieces of cell glass are subjected to half-etching along a boundary region for forming a plurality of pieces of cell glass (ST500). Subsequently, a part of the half-etched region is coated with an anti-tempering material to prevent tempering treatment (ST510). An example of the anti-tempering material may include a compound composed of silica (SiO₂) and aluminum oxide (Al₂O₃) Then, the mother glass is tempered (ST520). Subsequently, a substrate forming process is performed on the mother glass (ST530). After completion of the substrate forming process, the half-etched region coated with the anti-tempering material is cut and the cut edges of the pieces of cell glass are ground (ST540). Even after completion of the tempering treatment at ST520, the anti-tempering material may be left behind on the boundary region, and the residual anti-tempering material is removed due to being chamfered in the cutting process and the grinding process at ST540. The chamfered sides are regions that are not tempered and may become weak to external impact. In the present invention, after the cutting process, the chamfered sides that are not tempered may be coated with a hydrofluoric acid-containing paste and then washed, and thereby may be tempered to some extent.

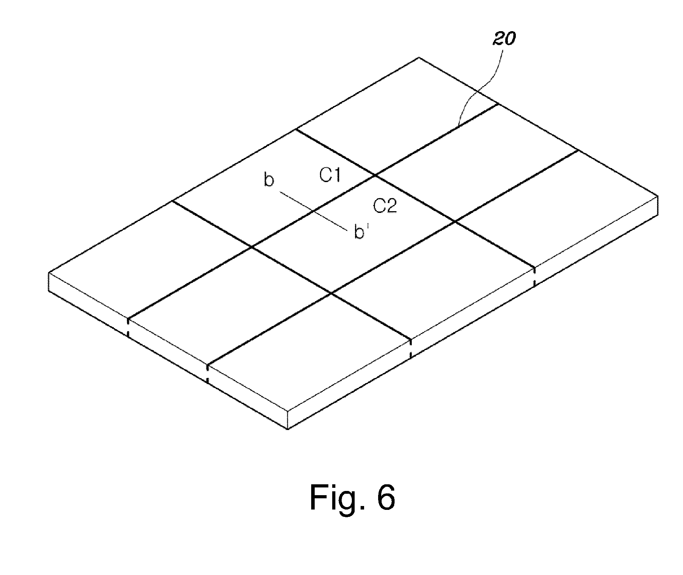

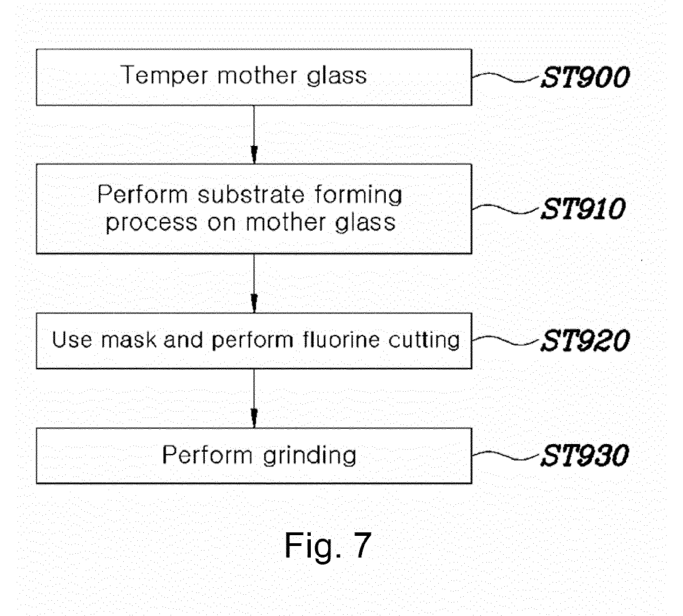

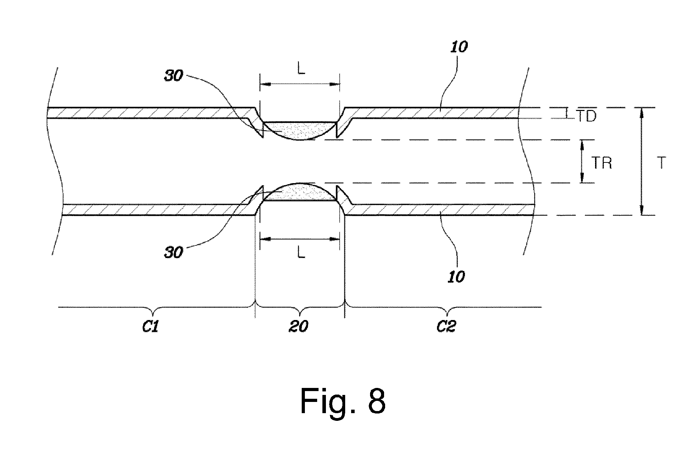

FIG. 6 is a perspective view illustrating the mother glass after ST500 and ST510 in the modification embodiment according to the invention. FIG. 7 is an enlarged cross-sectional view taken along the line b-b' of FIG. 6. As seen in FIG. 7, the mother glass, which is not tempered, is subjected to half-etching along the boundary region 20, and a part of the half-etched region is coated with the anti-tempering material 30. After completion of the tempering treatment in a state of FIG. 7, as seen in the cross-section of FIG. 8, the tempered region 10 is formed up to a predetermined depth of the region of the mother glass that is not coated with the anti-tempering material 30 from the surface of each of the upper and lower sides of the mother glass. In FIGS. 7 and 8, 'L' designates the horizontal distance of the boundary region between the neighboring pieces of cell glass, which is not tempered.

The depth of half-etching at ST500 is the same as that in the embodiment of FIG. 2.

### Second modification embodiment

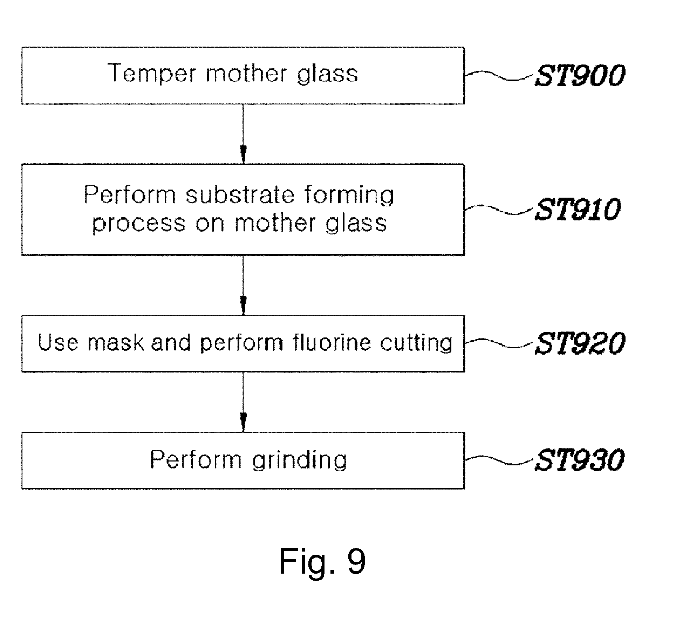

FIG. 9 is a flowchart illustrating a process of manufacturing a glass sheet for a touch panel using a tempered glass sheet according to still another embodiment of the present invention. This manufacturing process includes tempering mother glass (ST900), and performing a substrate forming process on the mother glass (ST910). Performing the substrate forming process on the mother glass is used to describe the process treatment flow which is compared with a process including cutting the mother glass into a plurality of pieces of cell glass and then performing a substrate forming process on each of the pieces of cut cell glass, and means that a substrate forming process including forming a transparent electrode, etc., is performed on the mother glass including a plurality of pieces of cell glass. Compared to when the substrate forming process is separately performed on the plurality of pieces of cell glass, the same process may be simultaneously carried out on the plurality of pieces of cell glass, thus shortening the production time and simplifying the process. After completion of the substrate forming process, a mask is used to perform the cutting process to form a plurality of pieces of cell glass, and fluorine etching is conducted, so that the mother glass is cut into the plurality of pieces of cell glass (ST920). Subsequently, the cut edges of the pieces of cell glass are ground, thereby completing the formation of a glass sheet for a touch panel.

The process disclosed in this second modification embodiment is problematic because chemical etching using fluorine (F) is performed after completion of formation of the transparent electrode, etc., and thus the layered structure resulting from the substrate forming process may be contaminated due to the etching solution. Hence, there is a need to develop a mask suitable therefor.

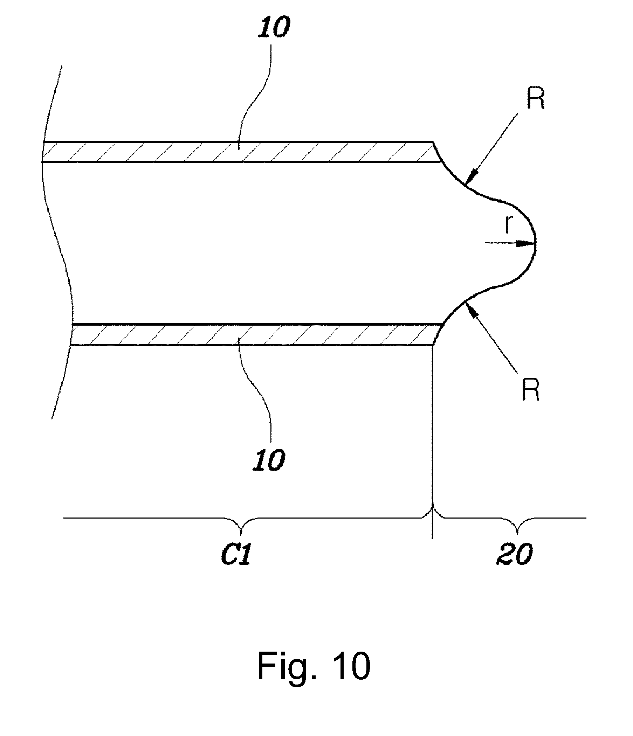

FIG. 10 is an enlarged view illustrating the cut edge of the cell glass produced according to the process of FIG. 2. The edge surface of the cut region 20 of cell glass may have a specific shape, which includes a center region located at the centerline of the thickness of the glass and outer regions located at the center region and both sides of the glass, wherein each of the outer regions has an externally concave curved shape due to half-etching and the center region has an externally convex curved shape connected to the concave curved shape due to grinding treatment.

FIG. 10 illustrates the edge surface of the cut edge of glass, which includes a center region located at the centerline of the thickness of the glass and outer regions located at the center region and both sides of the glass, wherein each of the outer regions has an externally concave curved shape as a single R curved surface due to isotropic half-etching and the center region has an externally convex curved shape as a single r curved shape connected to the concave curved shape due to grinding treatment.

That is, the tempered glass sheet for a touch panel produced according to the present invention is configured such that the edge surface of the cut edge includes a center region located at a centerline of a thickness of the glass and outer regions located at the center region and both sides of the glass, wherein each of the outer regions has an externally concave curved shape and the center region has an externally convex curved shape connected to the concave curved shape via grinding treatment.

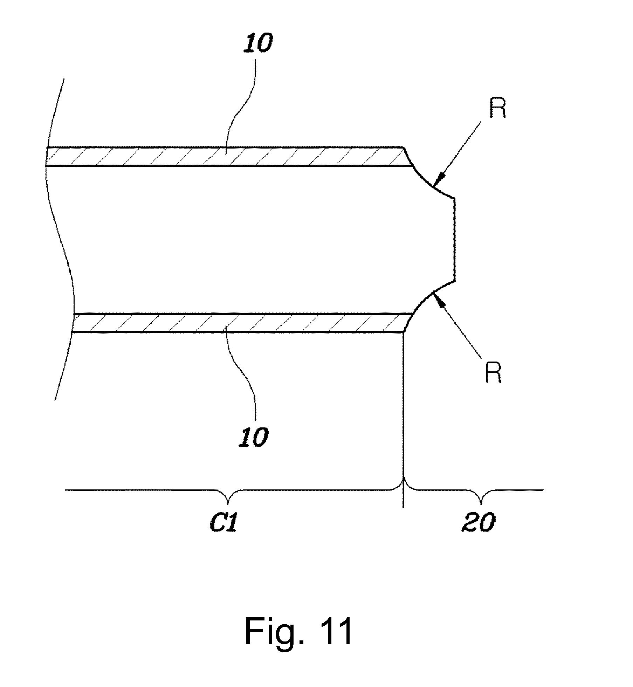

FIG. 11 is an enlarged view of the cut edge illustrating another cut form of the cell glass produced according to the process of FIG. 2. In the embodiment shown in FIG. 11, the central portion of the cut region 20 of cell glass is chamfered. The edge surface of the cut region 20 of the cell glass has a specific shape, which includes a center region located at a centerline of a thickness of glass and outer regions located at the center region and both sides of the glass, wherein each of the outer regions has an externally concave curved shape due to half-etching and the center region is provided in a chamfered form.

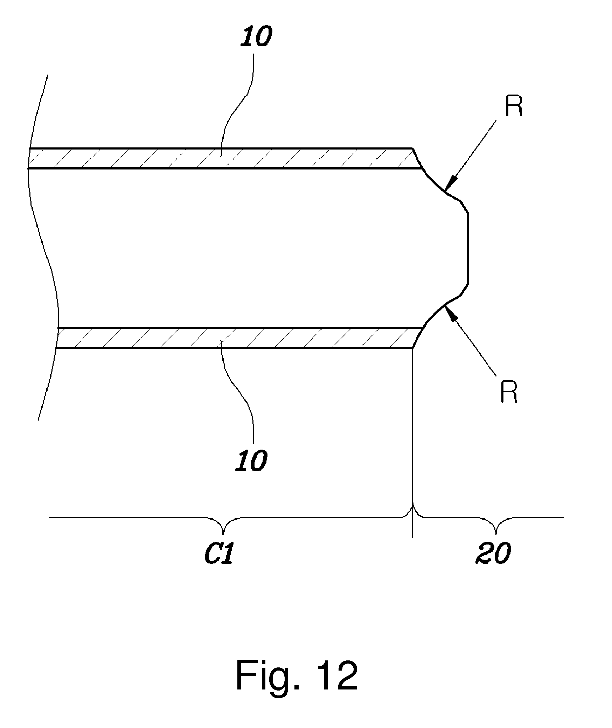

FIG. 12 is an enlarged view of the cut edge illustrating still another cut form of the cell glass produced according to the process of FIG. 2. In the embodiment shown in FIG. 12, additional chamfering may be performed at 45° between the curved portion and the vertically chamfered portion in FIG. 11.

Although the preferred embodiments of the present invention have been disclosed and illustrated using the specific terms, those skilled in the art will appreciate that such terms are merely used to clearly describe the present invention, and various modifications and variations of the embodiments of the present invention are possible, without departing from the scope and spirit of the invention as disclosed in the accompanying claims.

## Claims

1. A method of manufacturing a tempered glass sheet for a touch panel consisting of tempered glass, comprising:
a first step of tempering mother glass including a plurality of pieces of cell glass for a touch panel;
a second step of subjecting the mother glass to a substrate forming process including a transparent electrode forming process; and
a third step of cutting the mother glass subjected to the substrate forming process into the plurality of pieces of cell glass, and grinding cut edges of the pieces of cell glass.

2. The method of claim 1, further comprising a fourth step of subjecting a surface of the mother glass to half-etching along a boundary region which divides the mother glass into the plurality of pieces of cell glass, between the first step and the third step.

3. The method of claim 2, wherein the half-etching in the fourth step is performed so that a depth of half-etching is greater than a tempered depth formed via tempering in the first step from a surface of each of upper and lower sides of the mother glass, and is less than 1/2 of a total thickness (T) of the mother glass.

4. The method of claim 3, wherein the half-etching in the fourth step is performed so that a thickness (TR) of a residual region of the mother glass is greater than 50 µm.

5. The method of claim 1 or 2, wherein the cutting and the grinding in the third step are performed on a region of the mother glass subjected to half-etching, which is not tempered.

6. The method of claim 3, further comprising a fifth step of coating the cut edges with a hydrofluoric acid-containing paste solution and then performing washing, after the fourth step.

7. A method of manufacturing a tempered glass sheet for a touch panel consisting of tempered glass, comprising:
a first step of subjecting a surface of mother glass including a plurality of pieces of cell glass for a touch panel to half-etching along a boundary region which divides the mother glass into the plurality of pieces of cell glass;
a second step of coating a part of the region of the mother glass subjected to half-etching in the first step with an anti-tempering material so as not to be tempered;
a third step of tempering the mother glass coated with the anti-tempering material;
a fourth step of subjecting the mother glass subjected to half-etching and tempering in the third step to a substrate forming process including a transparent electrode forming process; and
a fifth step of cutting the mother glass subjected to the substrate forming process in the fourth step into the plurality of pieces of cell glass corresponding to a touch panel size, and grinding cut edges of the pieces of cell glass.

8. The method of claim 7, wherein the half-etching in the first step is performed so that a depth of half-etching is greater than a tempered depth formed via tempering in the third step from a surface of each of upper and lower sides of the mother glass, and is less than 1/2 of a total thickness (T) of the mother glass.

9. The method of claim 8, wherein the half-etching in the first step is performed so that a thickness (TR) of a residual region of the mother glass is greater than 50 µm.

10. The method of claim 7 or 8, wherein the cutting and the grinding in the fifth step are performed on the region of the mother glass coated with the anti-tempering material.

11. The method of claim 7 or 8, further comprising a sixth step of coating the cut edges with a hydrofluoric acid-containing paste solution and then performing washing, after the fifth step.

12. A tempered glass sheet for a touch panel, having an edge surface which includes a center region located at a centerline of a thickness of the tempered glass sheet and outer regions located at the center region and both sides of the tempered glass sheet, wherein each of the outer regions has an externally concave curved shape and the center region has an externally convex curved shape connected to the concave curved shape.

13. The tempered glass sheet of claim 12, wherein a part of the outer region having the concave curved shape and a whole of the center region having the convex curved shape are regions which are not tempered.

14. The tempered glass sheet of claim 12 or 13, wherein an interface between the outer region having the concave curved shape and the center region having the convex curved shape is formed to be deeper than a tempered depth of mother glass.
